# FASCICULE DE BREVET EUROPEEN

(11) **EP 2 899 826 B1**
(45) Date de publication et mention de la délivrance du brevet: **26.07.2017**
(21) Numéro de dépôt: 14197041.8
(22) Date de dépôt: 09.12.2014
(51) Int. Cl.: H02J 1/10, H02J 3/04, H02J 4/00, H02J 9/06, H02J 7/34

(54) **Système d'alimentation électrique sécurisé**
Gesichertes Stromzuführungssystem
Safe electrical power-supply system

(30) Priorité: 27.01.2014 FR 1450652
(43) Date de publication de la demande: 29.07.2015
(73) Titulaire: Schneider Electric Industries SAS, 92500 Rueil-Malmaison (FR)
(72) Inventeur: Vidalenche, Gilles, 38050 Grenoble Cedex 09 (FR); Peduzzi, Thierry, 38050 Grenoble Cedex 09 (FR)
(74) Mandataire: Tripodi, Paul

(56) Documents cités:
- WO-A1-2009/030027
- US-A- 5 598 039
- US-A1- 2010 096 929
- US-A1- 2011 161 468
- US-B1- 6 751 562

## Description

### Domaine technique de l'invention

La présente invention se rapporte à un système d'alimentation électrique sécurisée.

### Etat de la technique

De manière connue, un système d'alimentation électrique sécurisée d'une charge électrique comporte :
- une source d'alimentation électrique principale agencée pour alimenter la charge électrique,
- un circuit d'alimentation reliant la source d'alimentation électrique principale à la charge électrique,
- au moins un organe de commande commandé à l'état ouvert ou à l'état fermé pour respectivement ouvrir ou fermer ledit circuit électrique d'alimentation,
- une source d'alimentation électrique secondaire connectée sur le circuit d'alimentation et agencée pour alimenter la charge électrique en cas de coupure de l'alimentation électrique provenant de la source d'alimentation électrique principale.

La source d'alimentation électrique secondaire est plus communément appelée un onduleur et comporte une batterie qui est la source d'énergie pour alimenter la charge électrique en cas de coupure de l'alimentation électrique provenant de la source d'alimentation électrique principale. Lors d'une coupure de l'alimentation électrique provenant de la source d'alimentation électrique principale, par exemple suite à une disjonction, la source d'alimentation électrique secondaire alimente la charge jusqu'à l'épuisement de l'énergie stockée dans sa batterie ou jusqu'au rétablissement de l'alimentation électrique principale. Le problème de ce mode de fonctionnement est que si la charge ne consomme pas d'énergie, l'onduleur décharge la batterie par autoconsommation ce qui nuit à la disponibilité ultérieure de la source d'alimentation secondaire.

Le but de l'invention est de proposer une solution qui permette d'augmenter la disponibilité de la source d'alimentation électrique secondaire en préservant l'énergie stockée dans sa batterie et qui permette donc d'éviter la décharge de la batterie de la source d'alimentation électrique secondaire lorsque l'organe de commande est à l'état ouvert et que la charge électrique n'est pas connectée.

### Exposé de l'invention

Ce but est atteint par un système d'alimentation électrique sécurisée d'une charge électrique selon la revendication 1. Selon une particularité, le dispositif émetteur et le dispositif récepteur sont agencés pour communiquer entre eux sur une liaison de communication sans-fil.

Selon une autre particularité, le dispositif émetteur comporte un émetteur radiofréquence et une unité de traitement, ladite unité de traitement étant agencée pour commander l'envoi dudit message par l'émetteur radiofréquence.

Selon une autre particularité, le dispositif émetteur comporte un interrupteur de commande et il comporte une liaison mécanique, magnétique ou optique reliant ledit interrupteur de commande avec l'organe de commande, ledit interrupteur de commande étant connecté à l'unité de traitement.

Selon une autre particularité, le dispositif émetteur comporte un convertisseur coopérant avec l'organe de commande et ledit convertisseur est agencé pour convertir une énergie mécanique générée lors d'un changement d'état de l'organe de commande en une énergie électrique et ledit convertisseur est connecté à l'unité de traitement et à l'émetteur radiofréquence de manière à pouvoir les alimenter en énergie électrique.

Selon une autre particularité, le convertisseur est un générateur piézoélectrique ou un générateur électromagnétique.

Selon une autre particularité, le dispositif émetteur est connecté en parallèle de l'organe de commande et l'unité de traitement est agencée pour détecter l'état de l'organe de commande lors d'une situation de court-circuit ou de non court-circuit.

Dans les différentes situations suivantes, il s'agit donc, lors d'une coupure de l'alimentation électrique provenant de la source d'alimentation électrique principale, de:
- ne pas démarrer la source d'alimentation secondaire si la charge ne consommait pas d'énergie avant la coupure,
- arrêter la source d'alimentation électrique secondaire lorsque la charge électrique ne consomme plus d'énergie,
- démarrer la source d'alimentation électrique secondaire lorsqu'il y a un ordre de fermeture de l'organe de commande du circuit électrique d'alimentation de la charge électrique.

### Brève description des figures

D'autres caractéristiques et avantages vont apparaître dans la description détaillée qui suit faite en regard des dessins annexés dans lesquels :
- la figure 1 représente de manière schématique, le système d'alimentation électrique sécurisée de l'invention,
- les figures 2A, 2B et 2C représentent, selon deux modes de réalisation distincts, le dispositif de commande employé dans le système de l'invention.

### Description détaillée d'au moins un mode de réalisation

L'invention concerne un système d'alimentation électrique sécurisée dans lequel une source d'alimentation électrique secondaire 2 est agencée pour prendre le relais d'une source d'alimentation électrique principale 1 lors d'une coupure de l'alimentation électrique provenant de la source d'alimentation électrique principale 1. De manière plus concrète, la source d'énergie électrique principale est par exemple le réseau électrique sur lequel est connectée une charge électrique.

La charge électrique 3, par exemple une lampe, est reliée par un circuit électrique d'alimentation (8) à la source d'alimentation électrique principale 1. La source d'alimentation électrique secondaire 2 est également connectée à ce circuit électrique d'alimentation (8).

Par ailleurs, au moins un disjoncteur 4 est par exemple agencé pour surveiller le circuit électrique d'alimentation (8). En cas de coupure de l'alimentation électrique provenant de la source d'alimentation électrique principale 1, par exemple suite à une disjonction, la charge électrique 3 ne peut plus être alimentée par la source d'énergie électrique principale 1 et la source d'alimentation électrique secondaire 2 prend alors le relais. La source d'alimentation électrique secondaire 2 est ce que l'on appelle un onduleur et comporte une ou plusieurs batteries se déchargeant pour alimenter la charge électrique 3 en cas de coupure de l'alimentation électrique provenant de la source d'alimentation électrique principale 1.

Par ailleurs, un organe de commande 5, par exemple un interrupteur à bascule, un bouton poussoir, un interrupteur va-et-vient, un télérupteur, un contacteur ou un relais est connecté au circuit électrique d'alimentation (8) et commandé entre un état ouvert et un état fermé pour respectivement ouvrir ou fermer le circuit électrique d'alimentation (8) et ainsi agir ou non, selon son état, sur la charge électrique 3.

Habituellement, lors d'une coupure de l'alimentation électrique provenant de la source d'alimentation électrique principale 1, la source d'alimentation électrique secondaire 2 décharge ses batteries pour alimenter la charge électrique 3. Si l'organe de commande 5 du circuit d'alimentation électrique de la charge 3 est à l'état ouvert, l'onduleur décharge sa batterie par autoconsommation.

Pour résoudre ce problème, le système d'alimentation électrique sécurisée de l'invention comporte un dispositif de commande 6 spécifique qui comporte un dispositif émetteur 60 et un dispositif récepteur 61, communiquant entre eux sur une liaison de communication 62. Préférentiellement la liaison de communication 62 est sans-fil mais on pourrait imaginer employer une liaison de communication filaire.

Selon l'invention, le dispositif émetteur 60 est agencé pour coopérer avec l'organe de commande 5 de manière à envoyer vers le dispositif récepteur 61 un message représentatif du changement d'état de l'organe de commande 5.

Pour communiquer sur la liaison de communication 62 sans-fil, le dispositif émetteur 60 comporte préférentiellement un émetteur radiofréquence 63 agencé pour envoyer un message représentatif du changement d'état de l'organe de commande 5 du circuit électrique d'alimentation (8). L'envoi dudit message est ainsi synchronisé avec la fermeture ou l'ouverture de l'organe de commande 5.

Le dispositif émetteur 60 comporte également une unité de traitement 64 agencée pour détecter le changement d'état de l'organe de commande 5 et pour générer un ordre de commande à l'émetteur radiofréquence 63 en vue de l'envoi d'un message correspondant à ce changement d'état.

Pour alimenter le dispositif émetteur 60 et synchroniser l'organe de commande 5 avec le dispositif de commande 6, plusieurs modes de réalisation peuvent être envisagés.

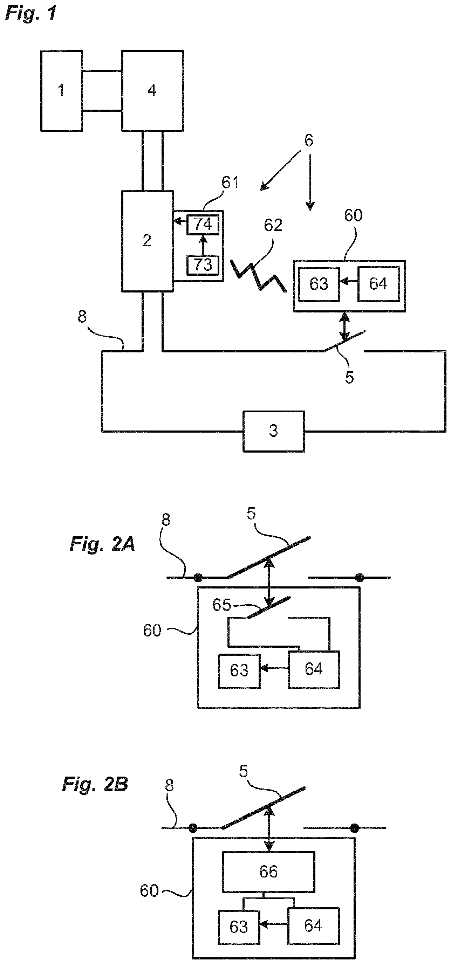

En référence à la figure 2A, un premier mode de réalisation consiste à doter le dispositif émetteur 60 d'un interrupteur de commande 65 et de relier mécaniquement, magnétiquement ou optiquement cet interrupteur de commande 65 avec l'organe de commande 5. Le changement d'état de l'interrupteur de commande est détecté par l'unité de commande 64 qui génère un ordre de commande à l'émetteur radiofréquence 63 pour l'envoi d'un message représentatif de l'état détecté. Le dispositif émetteur 60 est par exemple alimenté à l'aide d'une pile électrique. Une liaison mécanique entre l'organe de commande et l'interrupteur de commande est par exemple réalisée à l'aide d'une tige reliant les deux éléments de manière à synchroniser leurs mouvements. En revanche, une liaison magnétique est sans contact et est réalisée par exemple en dotant l'interrupteur de commande 65 d'un aimant et l'organe de commande 5 d'une partie en matériau ferromagnétique. L'architecture inverse est également possible. Le déplacement de l'organe de commande 5, d'un état à l'autre, entraîne, par effet magnétique, un déplacement de l'interrupteur de commande 65.

En référence à la figure 2B, un deuxième mode de réalisation consiste à doter le dispositif de commande 6 d'un convertisseur 66, qui est agencé pour convertir l'énergie mécanique générée par l'actionnement de l'organe de commande 5 en une énergie électrique destinée à alimenter le dispositif émetteur 60. Le convertisseur 66 peut être par exemple un générateur de type piézoélectrique ou un générateur électromagnétique. L'énergie mécanique générée lors du déplacement de l'organe de commande 5 lors de son changement d'état entraîne la génération d'une tension électrique employée pour alimenter le dispositif émetteur 60, c'est-à-dire son unité de traitement 64 et l'émetteur radiofréquence 63. Selon le signe de la tension électrique générée, l'unité de traitement 64 est agencé pour déduire l'état de l'organe de commande 5. L'unité de traitement 64 génère alors le message correspondant au nouvel état pris par l'organe de commande 5 et envoie un ordre de commande à l'émetteur radiofréquence 63 pour commander l'envoi de ce message. L'énergie générée par le convertisseur 66 est par exemple stockée dans un ou plusieurs condensateurs. Une unité de gestion de l'énergie électrique peut être employée pour gérer les apports d'énergie aux composants du dispositif émetteur 60.

Le générateur piézoélectrique sera par exemple réalisé à l'aide d'une tige solidarisée à l'organe de commande et agencée pour se déplacer à travers un élément à effet piézoélectrique. Une telle solution est par exemple décrite dans le brevet EP1238436B1.

Le générateur électromagnétique sera par exemple réalisé en employant un aimant permanent et une bobine électromagnétique. L'aimant permanent est par exemple fixé sur l'organe de commande 5 et la bobine électromagnétique est logée dans le dispositif émetteur 60. Un déplacement de l'organe de commande 5 d'un état à l'autre entraîne un déplacement de l'aimant permanent et une variation de flux magnétique dans la bobine électromagnétique. Cette variation de flux magnétique engendre la création d'un courant électrique dans l'enroulement de la bobine électromagnétique. Une telle solution est par exemple décrite dans la demande de brevet EP1952516A1.

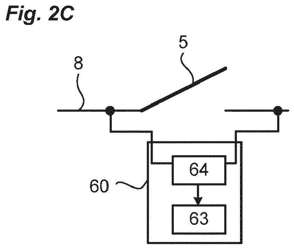

En référence à la figure 2C, un troisième mode de réalisation consiste à connecter le dispositif émetteur 60 en parallèle de l'organe de commande 5 sur le circuit d'alimentation électrique. Dans cette configuration, l'unité de traitement 64 du dispositif émetteur 60 détecte le changement d'état de l'organe de commande 5 par une détection de court-circuit. Lorsque l'organe de commande 5 passe de l'état ouvert à l'état fermé, le dispositif émetteur 60 est mis en court-circuit. Cette mise en court-circuit est détectée par l'unité de commande 64 du dispositif émetteur qui commande alors l'émetteur radiofréquence 63 pour l'envoi d'un message représentatif de l'état fermé de l'organe de commande 5. Inversement, l'ouverture de l'organe de commande est également détectée par l'unité de commande 64 du dispositif émetteur 63 par la fin du court-circuit et un message représentatif de l'état ouvert de l'organe de commande 5 est envoyé par l'émetteur radiofréquence 63. Dans ce mode de réalisation, le dispositif émetteur 60 est par exemple alimenté à l'aide d'une pile ou d'un système de recharge d'un condensateur alimenté par la tension aux bornes de l'organe de commande 5 quand il est à l'état ouvert.

Le dispositif récepteur 61 comporte pour sa part un récepteur radiofréquence 73 agencé pour recevoir chaque message envoyé par l'émetteur radiofréquence 63 du dispositif émetteur 60. Le dispositif récepteur 61 comporte également une unité de traitement 74 agencée pour traiter le message reçu et pour envoyer un ordre d'activation ou de désactivation de la source d'alimentation électrique secondaire 2, selon l'état de l'organe de commande 5. En présence d'une coupure de l'alimentation électrique provenant de la source d'alimentation électrique principale 1, nécessitant l'intervention de la source d'alimentation électrique secondaire 2 pour alimenter la charge électrique 3, le dispositif récepteur 61 fonctionne de la manière suivante :
- Si l'organe de commande 5 est commandé de l'état fermé vers l'état ouvert, l'unité de traitement 74 du dispositif récepteur 61 commande la désactivation de la source d'alimentation électrique secondaire 2.
- Si l'organe de commande 5 est commandé de l'état ouvert vers l'état fermé, l'unité de traitement commande l'activation de la source d'alimentation électrique secondaire.

Préférentiellement, le dispositif émetteur 60 est couplé au dispositif récepteur 61 et est agencé pour communiquer avec ce dispositif récepteur 61. Bien entendu, selon la configuration du système d'alimentation électrique, on peut imaginer employer plusieurs dispositifs émetteurs couplés à un seul dispositif récepteur.

## Revendications

1. Système d'alimentation électrique sécurisée d'une charge électrique (3) comprenant :
- une source d'alimentation électrique principale (1),
- un circuit électrique d'alimentation (8) reliant la source d'alimentation électrique principale (1) à la charge électrique,
- au moins un organe de commande (5) connecté sur le circuit électrique d'alimentation et commandé à l'état ouvert ou à l'état fermé pour respectivement ouvrir ou fermer ledit circuit électrique d'alimentation (8) et ainsi agir, selon son état, sur la charge électrique,
- une source d'alimentation électrique secondaire (2) connectée sur le circuit électrique d'alimentation et agencée pour alimenter la charge électrique (3) en cas de coupure de l'alimentation électrique fournie par la source d'alimentation électrique principale (1),
**caractérisé en ce qu'**il comporte :
- un dispositif de commande (6) comprenant un dispositif émetteur (60) agencé pour envoyer un message représentatif d'un changement d'état de l'organe de commande (5) et un dispositif récepteur (61) agencé pour recevoir ledit message et pour commander la marche ou l'arrêt de ladite source d'alimentation électrique secondaire (2) selon le nouvel état pris par l'organe de commande (5), et **en ce que**
- le dispositif récepteur est agencé pour commander l'arrêt de ladite source d'alimentation électrique secondaire lorsque l'organe de commande (5) est à l'état ouvert.

2. Système selon la revendication 1, **caractérisé en ce que** le dispositif émetteur (60) et le dispositif récepteur (61) sont agencés pour communiquer entre eux sur une liaison de communication (62).

3. Système selon la revendication 2, **caractérisé en ce que** la liaison de communication est filaire.

4. Système selon la revendication 2, **caractérisé en ce que** la liaison de communication est sans-fil.

5. Système selon la revendication 1, **caractérisé en ce que** le dispositif émetteur (60) comporte un émetteur radiofréquence (63) et une unité de traitement (64), ladite unité de traitement (64) étant agencée pour commander l'envoi dudit message par l'émetteur radiofréquence (63).

6. Système selon la revendication 5, **caractérisé en ce que** le dispositif émetteur (60) comporte un interrupteur de commande (65) et **en ce qu'**il comporte une liaison mécanique, magnétique ou optique reliant ledit interrupteur de commande avec l'organe de commande, ledit interrupteur de commande (65) étant connecté à l'unité de traitement (64).

7. Système selon la revendication 5, **caractérisé en ce que** le dispositif émetteur (60) comporte un convertisseur (66) coopérant avec l'organe de commande (5) et **en ce que** ledit convertisseur (66) est agencé pour convertir une énergie mécanique générée lors d'un changement d'état de l'organe de commande (5) en une énergie électrique et **en ce que** ledit convertisseur (66) est connecté à l'unité de traitement (64) et à l'émetteur radiofréquence (63) de manière à pouvoir les alimenter en énergie électrique.

8. Système selon la revendication 5, **caractérisé en ce que** le convertisseur est un générateur piézoélectrique ou un générateur électromagnétique.

9. Système selon la revendication 3, **caractérisé en ce que** le dispositif émetteur (60) est connecté en parallèle de l'organe de commande (5) et **en ce que** l'unité de traitement (64) est agencée pour détecter l'état de l'organe de commande (5).

## Patentansprüche

1. Gesichertes Stromzuführungssystem einer elektrischen Last (3), umfassend:
- eine Hauptstromzuführungsquelle (1),
- eine Stromzuführungsschaltung (8), die die Hauptstromzuführungsquelle (1) mit der elektrischen Last verbindet,
- mindestens ein Steuerelement (5), das an die Stromzuführungsschaltung angeschlossen ist und in den offenen Zustand oder in den geschlossenen Zustand gesteuert wird, um die Stromzuführungsschaltung (8) zu öffnen bzw. zu schließen und auf diese Weise, je nach seinem Zustand, auf die elektrische Last einzuwirken,
- eine Nebenstromzuführungsquelle (2), die an die Stromzuführungsschaltung angeschlossen und dazu vorgesehen ist, die elektrische Last (3) um Falle einer Unterbrechung der von der Hauptstromzuführungsquelle (1) gelieferten Stromzuführung zu speisen,
**dadurch gekennzeichnet, dass** es umfasst:
- eine Steuervorrichtung (6), umfassend eine Sendevorrichtung (60), die dazu vorgesehen ist, eine Meldung, die für eine Zustandsänderung des Steuerelements (5) repräsentativ ist, zu senden, und eine Empfangsvorrichtung (61), die dazu vorgesehen ist, die Meldung zu empfangen und das Einschalten oder Ausschalten der Nebenstromzuführungsquelle (2) je nach dem neuen Zustand, der von dem Steuerelement (5) eingenommen ist, zu steuern, und dass
- die Empfangsvorrichtung dazu vorgesehen ist, das Ausschalten der Nebenstromzuführungsquelle zu steuern, wenn sich das Steuerelement (5) im offenen Zustand befindet.

2. System nach Anspruch 1, **dadurch gekennzeichnet, dass** die Sendevorrichtung (60) und die Empfangsvorrichtung (61) dazu vorgesehen sind, miteinander über eine Kommunikationsverbindung (62) zu kommunizieren.

3. System nach Anspruch 2, **dadurch gekennzeichnet, dass** die Kommunikationsverbindung über Draht erfolgt.

4. System nach Anspruch 2, **dadurch gekennzeichnet, dass** die Kommunikationsverbindung drahtlos ist.

5. System nach Anspruch 1, **dadurch gekennzeichnet, dass** die Sendevorrichtung (60) einen Funkfrequenzsender (63) und eine Bearbeitungseinheit (64) umfasst, wobei die Bearbeitungseinheit (64) dazu vorgesehen ist, das Senden der Meldung über den Funkfrequenzsender (63) zu steuern.

6. System nach Anspruch 5, **dadurch gekennzeichnet, dass** die Sendevorrichtung (60) einen Steuerschalter (65) umfasst, und dass es eine mechanische, magnetische oder optische Verbindung umfasst, die den Steuerschalter mit dem Steuerelement verbindet, wobei der Steuerschalter (65) an die Bearbeitungseinheit (64) angeschlossen ist.

7. System nach Anspruch 5, **dadurch gekennzeichnet, dass** die Sendevorrichtung (60) einen Wandler (66) umfasst, der mit dem Steuerelement (5) zusammenwirkt, und dass der Wandler (66) dazu vorgesehen ist, eine mechanische Energie, die bei einer Zustandsänderung des Steuerelements (5) erzeugt wird, in eine elektrische Energie umzuwandeln, und dass der Wandler (66) an die Bearbeitungseinheit (64) und den Funkfrequenzsender (63) angeschlossen ist, um sie mit Strom speisen zu können.

8. System nach Anspruch 5, **dadurch gekennzeichnet, dass** der Wandler ein piezoelektrischer Generator oder ein elektromagnetischer Generator ist.

9. System nach Anspruch 3, **dadurch gekennzeichnet, dass** die Sendevorrichtung (60) parallel zum Steuerelement (5) angeschlossen ist, und dass die Bearbeitungseinheit (64) dazu vorgesehen ist, den Zustand des Steuerelements (5) zu erfassen.

## Claims

1. Secure electrical supply system for powering an electrical load (3) comprising:
- a main electrical power supply source (1),
- an electrical power supply circuit (8) linking the main electrical power supply source (1) to the electrical load,
- at least one control unit (5) connected to the electrical power supply circuit and controlled to the open state or to the closed state so as to respectively open or close said electrical power supply circuit (8), and thus act, according to its state, on the electrical load,
- a secondary electrical power supply source (2) connected to the electrical power supply circuit and designed to power the electrical load (3) in case of interruption of the electrical power supply provided by the main electrical power supply source (1),
**characterized in that** it comprises:
- a control device (6) comprising an emitter device (60) designed to dispatch a message representative of a change of state of the control unit (5) and a receiver device (61) designed to receive said message and to control the turning on or the turning off of said secondary electrical power supply source (2) according to the new state taken by the control unit (5), and **in that**
- the receiver device is designed to control the turning off of said secondary electrical power supply source when the control unit (5) is in the open state.

2. System according to Claim 1, **characterized in that** the emitter device (60) and the receiver device (61) are designed to communicate with one another over a communication link (62).

3. System according to Claim 2, **characterized in that** the communication link is wired.

4. System according to Claim 2, **characterized in that** the communication link is wireless.

5. System according to Claim 1, **characterized in that** the emitter device (60) comprises a radiofrequency emitter (63) and a processing unit (64), said processing unit (64) being designed to control the dispatching of said message by the radiofrequency emitter (63).

6. System according to Claim 5, **characterized in that** the emitter device (60) comprises a control switch (65) and **in that** it comprises a mechanical, magnetic or optical link linking said control switch with the control unit, said control switch (65) being connected to the processing unit (64).

7. System according to Claim 5, **characterized in that** the emitter device (60) comprises a converter (66) cooperating with the control unit (5) and **in that** said converter (66) is designed to convert mechanical energy generated during a change of state of the control unit (5) into electrical energy and **in that** said converter (66) is connected to the processing unit (64) and to the radiofrequency emitter (63) so as to be able to supply them with electrical energy.

8. System according to Claim 5, **characterized in that** the converter is a piezoelectric generator or an electromagnetic generator.

9. System according to Claim 3, **characterized in that** the emitter device (60) is connected in parallel with the control unit (5) and **in that** the processing unit (64) is designed to detect the state of the control unit (5).
